# EUROPEAN PATENT APPLICATION

(11) **EP 4 343 627 A1**
(43) Date of publication of application: **27.03.2024**
(21) Application number: 22196962.9
(22) Date of filing: 21.09.2022
(51) Int. Cl.: G06N 3/0464, G06N 3/088

(54) **IMPROVED TRAINING OF SLOT-BASED MACHINE LEARNING MODELS**

(71) Applicant: Robert Bosch GmbH, 70442 Stuttgart (DE)
(72) Inventor: Neumann, Gerhard, Karlsruhe (DE); Gao, Ning, 71154 Nufringen (DE)

(57) **Abstract**

A method (100) for training a machine learning model (1) that is configured to process measurement data (2) with respect to a given task, wherein said model (1) comprises a slot building part (11) that is configured to assign features (3) of an inputted record of measurement data (2) to a plurality of slots (4a-4d) and a task part (12) that is configured to process the features (3) of the record of measurement data (2) that are assigned to each slot (4a-4d) separately, the method (100) comprising the steps of:
• providing (110) training samples (2a) for records of measurement data (2);
• producing (120), from each training sample (2a), by at least one feature extraction layer (11a) in the slot building part (11), at least one feature map (3#);
• decomposing (130) each feature map (3#) into N components (3a-3f) according to a predetermined decomposing criterion and/or method;
• initializing (140) a predetermined number K of slots (4a-4d) by assigning, to these slots (4a-4d), features (3) from the feature map (3#), based at least in parts on the N components (3a-3f); and
• training (150) the slot building part (11) and the task part (12) towards at least one given objective.

## Description

The present invention relates to the training of a particular class of machine learning models that assign features of their input data to a plurality of slots before processing them, slot by slot, with respect to a given task.

### Background

Many image processing tasks, such as discovering and classifying objects visible in the image, are in fact two-fold. First, object instances need to be identified, and second, some evaluation with respect to a given task needs to be performed on the object instance. It has proven promising to separate these two tasks and divide a machine learning model for the image processing accordingly. For example, a slot building part of the model may decompose the objects of the image using multiple slots, each of which gets assigned only a single object. The contents of the different slots may then be processed with respect to the given task independently from one another.

(F. Locatello et al., "Object-Centric Learning with Slot Attention", arXiv: 2006.15055) discloses a machine learning model that uses a slot attention module to assign features of images to slots, which are then processed with respect to different tasks. The slot attention module is trained in an iterative manner using a recurrent function, starting from an initialization that is randomly drawn from a normal distribution.

### Disclosure of the invention

The invention provides a method for training a machine learning model that is configured to process measurement data with respect to a given task. In particular, the term "machine learning model" comprises any function with trainable parameters that exhibits a power to generalize from training samples to unseen data. For example, the machine learning model may be a neural network, or it may comprise one or more neural networks.

The machine learning model comprises a slot building part that is configured to assign features of an inputted record of measurement data to a plurality of slots and a task part that is configured to process the features of the record of measurement data that are assigned to each slot separately. Herein, "separately" may, in particular, comprise that the processing of features assigned to one slot is performed independently from the processing of features assigned to all other slots. That is, if features assigned to one slot are processed with respect to the given task to yield some task result, changing features assigned only to other slots will not change this task result.

In the course of the method, training samples for records of measurement data are provided. At least one feature extraction layer in the slot building part produces at least one feature map from each training sample. For example, a feature map may have three dimensions, wherein two dimensions represent coordinates in the feature map and the third dimension represents different channels of each feature.

Each feature map is decomposed into N components according to a predetermined decomposing criterion and/or method. In particular, the value of N determines the level of detail of the original data that will be preserved and may be chosen according to which level of detail is desired.

A predetermined number of K slots is initialized by assigning, to these slots, features from the feature map, based at least in part on the N components. That is, each slot may be assigned one or more features from the one or more components, or a mixture or superposition of one or more features from the one or more components. In particular, the value of K may be motivated from the task at hand. For example, the value of K may represent a number of object instances that are sought in an image.

The slot building part and the task building part may then be trained towards at least one given objective. Both parts may be trained simultaneously, but it is also possible to train the slot building part first and then start the training of the task part, with or without further training of the slot building part.

The advantage of initializing the K slots based on features from the N components into which the feature map has been decomposed is that the optimization process of the training only needs to go a shorter way towards the optimal assignment of features to slots. This is because the optimization does not need to be performed from scratch; rather, it is starting from information that is already evident from the feature map and has been extracted from this feature map. This starting point is already somewhat close to the optimal assignment in the space of features, whereas the random initialization can be anywhere in the space of features. The advantage of this is three-fold.

First, the number of iterations, and hence the computation time, that is needed to arrive at the optimal assignment of features to slots is reduced because information that is already on hand does not need to be re-discovered.

Second, the probability that the optimization will reach a global optimum of the assignment of features to slots is increased. Apart from the one global optimum, several local optima are very likely to exist. The random initialization might be so close to one such local optimum that the optimization locks on to this local optimum, rather than striving for the global optimum.

Third, the training becomes more deterministic and reproducible. The decomposing of each feature map into the N components can be performed using deterministic operations. This means that every time the training is performed, the same assignment of features to slots may be obtained. In view of the concrete application at hand, this is more plausible than an assignment that has some random variations. For example, if the slots represent object instances, there is only one objective truth as to which image features belong to which object instance. There is no motivation why the contents of the slot should vary when the slots are optimized again based on the same training data.

In particular, if the training of both the slot building part and the task part is performed simultaneously, it becomes easier to diagnose any problems if the final result of the training is not satisfactory. If both the training of the slot building part and the training of the task part start from some random initialization, it is harder to pinpoint the problem.

In a particularly advantageous embodiment, the measurement data comprises at least one image. In this case, at least one feature extraction layer is a convolutional layer that applies one or more filter kernels to the measurement data in a sliding manner with a predetermined stride. An image may encode any suitable observable quantity, such as a light intensity received by a detector, in pixel values. The pixels may be arranged in any suitable regular grid, e.g., a twodimensional or three-dimensional grid. In particular, a stack of multiple convolutional layers may be used to first detect basic features in the first layers and then detect more complex features in the later layers.

In a further particularly advantageous embodiment, the slots represent object types and/or object instances whose presence the measurement data indicates. This facilitates processing or manipulating individual object instances, or objects of individual types, in scenes described by the measurement data.

In a further advantageous embodiment, both the slot building part and the task part are trained towards one single objective that is measured on the result produced by the task part. That is, the training is performed "end-to end", and the performance of the machine learning model may be measured by comparing the final result to ground truth with which the respective training sample is labelled. In this manner, no separate ground truth is necessary for the training of the slot building part.

In a further particularly advantageous embodiment, during the initializing of the slots, each feature of the at least one feature map is assigned to at most one slot. In this manner, the processing and/or manipulating of each entity (such as an object instance or object type) that corresponds to one slot becomes more independent from the processing of other entities that correspond to other slots. In essence, in an analogy to image editing software, the slots correspond to layers that are stacked on top of one another and whose blending together produces the final image. The information on each layer can be manipulated without affecting the information on any other layers.

In a further particularly advantageous embodiment, in the course of the predetermined decomposing method, the features of the feature map are clustered into a plurality of clusters. This allows to discern different components of the feature map in an unsupervised and statistically motivated manner.

One exemplary way of clustering is k-means clustering. This algorithm quickly finds the centroids of the clusters in the space of features. It needs the number N of sought clusters as input.

Another exemplary way of clustering is mean shift clustering. This does not require setting the number N of sought clusters in advance, at the price that it is a bit more difficult to achieve convergence.

In another advantageous embodiment, in the course of the predetermined composing method, each feature is mapped to a numeric value by a convolutional layer of the slot building part. Features are then assigned to components based at least in part on this numeric value. The numeric value provides an easy manner to rank features, and numeric ranges and/or threshold values may be used to group features. In particular, differences between numeric values to which different features are mapped introduce a notion of distance between these features.

In a further particularly advantageous embodiment, the initializing of the slots comprises transforming features that characterize, or belong to, components into features that characterize, or belong to, slots with at least one trainable transform layer of the slot building part. In this manner, there is a better flexibility to adapt numbers N of components into which the feature map is decomposed to desired numbers K of slots. As discussed before, N determines the level of detail in the feature map that is retained, whereas K is motivated or given by the concrete application (task) at hand.

In particular, at least one trainable transform layer may be a fully connected layer with a rectified linear unit, ReLU, activation function. This provides a linear transformation between features belonging to components and features belonging to slots. That is, features may be carried over from components to slots as they are, but a feature in a slot may also be a linear combination of two or more features in one component or in different components.

Examples for given tasks to which the machine learning model may be trained with the present method include:
- reconstructing the original measurement data from the features assigned to the slots;
- classifying a type of object whose presence the measurement data indicates;
- creating a new record of measurement data that is modified with respect to a particular object whose presence the measurement data indicates; and
- synthetizing multiple records of measurement data into a new record of measurement data.

All these tasks benefit from the decoupling of the identifying of object types and object instances from the working with these object types and object instances. In particular, once the slot building part has been trained, this training may be at least partially re-used when switching to another task.

The goal of the training is to enable the machine learning model to produce good task results. Therefore, in a further particularly advantageous embodiment, once training is completed, records of measurement data captured by at least one sensor are provided to the trained slot building part. Features of the record of measurement data are assigned to slots by the trained slot building part. The features assigned to each slot are processed by the trained task part, which yields a task result with respect to the given task. Due to the improved training, the quality of the task result is increased. That is, when the accuracy with respect to the task is measured by comparing the task result to ground truth in the form of test or validation data, this accuracy will improve.

In a further particularly advantageous embodiment, based on the task result, an actuation signal is computed. A vehicle, a driving assistance system, a surveillance system, a quality inspection system, and/or a medical imaging system, is actuated with this actuation signal. In this manner, the probability that the action performed by the actuated system in response to the actuation is appropriate for the situation encoded in the measurement data is increased.

The method may be wholly or partially computer-implemented and thus embodied in software. The invention therefore also relates to a computer program with machine-readable instructions that, when executed by one or more computers and/or compute instances, cause the one or more computers and/or compute instances to perform the method described above. Herein, control units for vehicles, and other embedded systems within technical devices that are able to execute machine-readable instructions, are to be regarded as computers as well. Examples for compute instances are virtual machines, containers or serverless execution environments in which machine-readable instructions may be executed in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

In the following, further advantageous embodiments will be illustrated using Figures without any intention to limit the scope of the invention.

### Description of the Figures

The Figures show:
Figure 1 Exemplary embodiment of the method 100 for training a machine learning model 1;
Figure 2 Illustration of the effect of the improved initialization on the finding of an optimal assignment of features 3 to slots 4a-4d;
Figure 3 Exemplary processing of a training sample 2a towards an initial assignment of features 3 to slots 4a-4d.

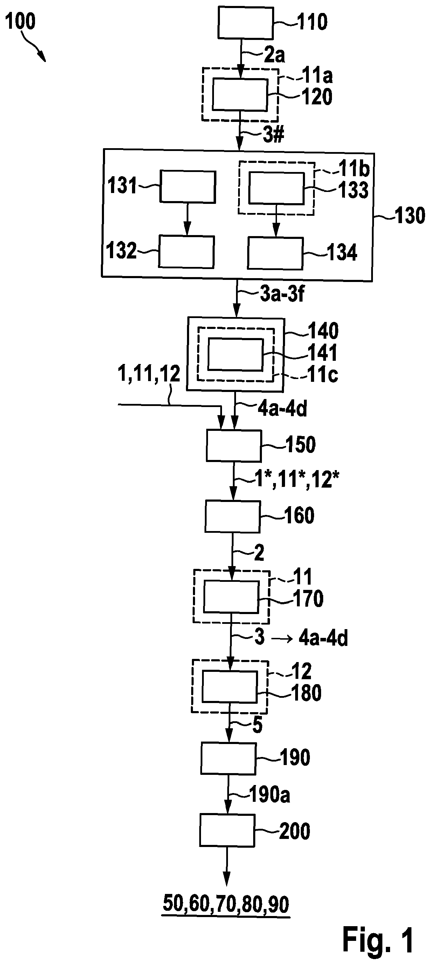

Figure 1 is a schematic flow chart of an embodiment of the method 100 for training a machine learning model 1. The machine learning model 1 comprises a slot building part 11 that is configured to assign features 3 of an inputted record of measurement data 2 to a plurality of slots 4a-4d, and a task part 12 that is configured to process the features 3 of the record of measurement data 2 that are assigned to each slot 4a-4d separately.

In step 110, training samples 2a for records of measurement data 2 are provided.

In step 120, at least one feature map 3# is extracted from each training sample 2a by at least one feature extraction layer 11a in the slot building part 11.

In step 130, each feature map 3# is decomposed into N components 3a-3f according to a predetermined decomposing criterion and/or method.

According to block 131, the features 3 of the feature map 3# may be clustered into a plurality of clusters. According to block 132, in response to a feature 3 belonging to a cluster, the feature 3 may be assigned to a component corresponding to this cluster. Such a cluster may be in turn represented by a particular feature 3, such as the feature 3 that corresponds to, or is closest to, the center of the cluster.

According to block 133, features 3 of the feature map 3# may be mapped to a numeric value by a convolutional layer 11b of the slot building part 11. According to block 134, the features 3 may then be assigned to components 3a-3f based at least in part on this numeric value.

In step 140, a predetermined number K of slots 4a-4d is initialized by assigning, to these slots 4a-4d, features 3 from the feature map 3#, based at least in parts on the N components 3a-3f. In a simple case, K equals N, and the components 3a-3f may be immediately re-used as slots. But, as discussed before, a higher number N of components 3a-3f that preserves more detail may be processed into a lower number K of slots 4a-3d in any suitable manner.

For example, according to block 141, features 3 that characterize, or belong to, components 3a-3f may be transformed into features 3' that characterize, or belong to, slots 4a-4d with at least one trainable transform layer 11c of the slot building part 11. For example, features 3' in the slots 4a-4d may be linear combinations of features 3 in the components 3a-3f.

In step 150, the slot building part 11 and the task part 12 are trained towards at least one given objective. Herein, the training of the slot building part 11 can make use of the assignments of features 3 to slots 4a-4d that have been obtained for the training samples 2a in any suitable manner. The resulting trained states of the slot building part 11, the task part 12, and the machine learning model 1 as a whole are labelled with the reference signs 11*, 12* and 1*, respectively.

In step 160, records of measurement data 2 captured by at least one sensor to the trained slot building part 11*. Features 3 of the records of measurement data 2 are then assigned to slots 4a-4d by the trained slot building part 11* in step 170. The trained task part 12* then processes the features assigned to each slot 4a-4d, which produces a task result 5 with respect to the given task in step 180.

In step 190, based on the task result 5, an actuation signal 190b is computed. In step 200, a vehicle 50, a driving assistance system 60, a surveillance system 70, a quality inspection system 80, and/or a medical imaging system 90, is actuated with the actuation signal 190a.

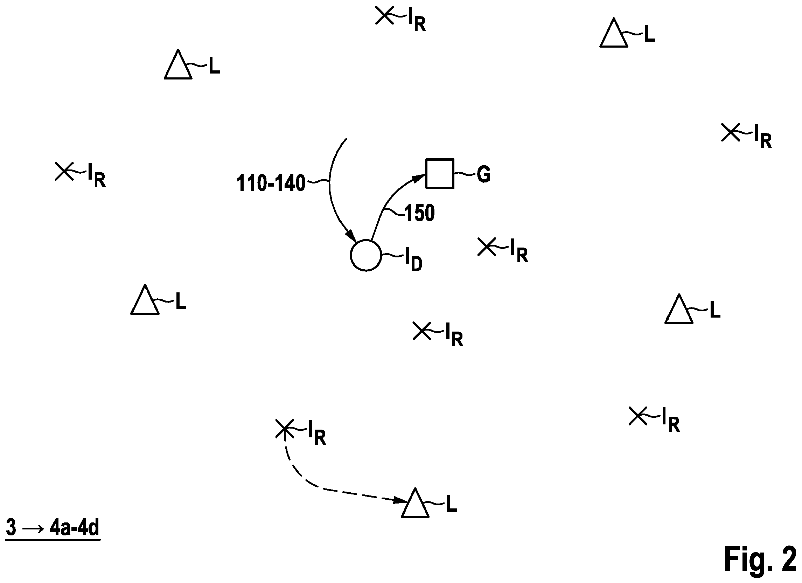

Figure 2 illustrates how the improved initialization of slots 4a-4d increases the probability that, in the space of all possible assignments of features 3 to slots 4a-4d, a global optimum G is found. Apart from the global optimum G, there are many local optima L in said space. The previous random initialization IR could place the initial assignment of features 3 to slots 4a-4d anywhere in the space. Thus, this initial assignment might be already close to the global optimum G, but it might just as well be a lot closer to one of the local optima L. In the latter case, the optimization might strive for such a local optimum, which is illustrated with a dashed line in one example.

By contrast, the present deterministic initialization according to steps 110 to 140 of the method 100 places the initial assignment I_{D} quite close to the global optimum already. Thus, when the slot building part 11 is trained in step 150, the optimization is quite likely to find the global optimum G.

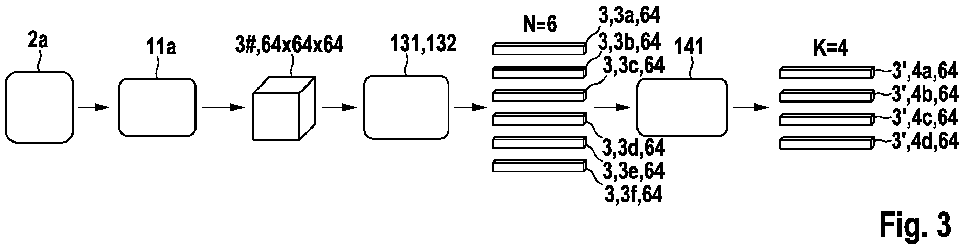

Figure 3 illustrates how a training sample 2a is processed into an assignment of its features 3 to slots 4a-4d. The training sample 2a is an image that may have any practical number of pixels. By means of one or more feature extraction layers 11a, a feature map 3# of the training sample 2a is produced. In the example shown in Figure 3, the feature map 3# comprises 64x64 features, and each feature comprises 64 channels. Thus, the feature map 3# is a tensor of dimension 64x64x64.

According to blocks 131 and 132, by means of k-means clustering, the features 3 from the feature map 3# are initially assigned to N=6 different components 3a-3f. Each such component 3a-3f may be characterized by a particular representative feature 3, such as the center of the cluster that corresponds to the respective component 3a-3f. Each such representative feature 3 has dimension 64.

According to block 141, the features 3 that characterize, or belong to, the components 3a-3f are transformed to features 3' in the K=4 slots 4a-4d. For example, different slots 4a-4d may contain features 3' that are different linear combinations of features 3 in components 3a-3f. In this process, each feature 3' retains dimension 64.

If assignments of features 3 to slots 4a-4d are computed iteratively during inference, this initialization may be re-used for the actual measurement data 2 just as well.

## Claims

1. A method (100) for training a machine learning model (1) that is configured to process measurement data (2) with respect to a given task, wherein said model (1) comprises a slot building part (11) that is configured to assign features (3) of an inputted record of measurement data (2) to a plurality of slots (4a-4d) and a task part (12) that is configured to process the features (3) of the record of measurement data (2) that are assigned to each slot (4a-4d) separately, the method (100) comprising the steps of:
• providing (110) training samples (2a) for records of measurement data (2);
• producing (120), from each training sample (2a), by at least one feature extraction layer (11a) in the slot building part (11), at least one feature map (3#);
• decomposing (130) each feature map (3#) into N components (3a-3f) according to a predetermined decomposing criterion and/or method;
• initializing (140) a predetermined number K of slots (4a-4d) by assigning, to these slots (4a-4d), features (3) from the feature map (3#), based at least in parts on the N components (3a-3f); and
• training (150) the slot building part (11) and the task part (12) towards at least one given objective.

2. The method (100) of claim 1, wherein the measurement data (2) comprises at least one image, and wherein at least one feature extraction layer (11a) is a convolutional layer that applies one or more filter kernels to the measurement data (2) in a sliding manner with a predetermined stride.

3. The method (100) of any one of claims 1 to 2, wherein the slots (4a-4d) represent object types and/or object instances whose presence the measurement data (2) indicates.

4. The method (100) of any one of claims 1 to 3, wherein both the slot building part (11) and the task part (12) are trained (151) towards one single objective that is measured on the result produced by the task part.

5. The method (100) of any one of claims 1 to 4, wherein, during the initializing (140) of the slots (4a-4d), each feature (3) of the at least one feature map (3#) is assigned to at most one slot (4a-4d).

6. The method (100) of any one of claims 1 to 5, wherein the predetermined decomposing method comprises:
• clustering (131) the features (3) of the feature map (3#) into a plurality of clusters; and
• in response to a feature (3) belonging to a cluster, assigning (132) the feature (3) to a component corresponding to this cluster.

7. The method (100) of claim 6, wherein the clustering is performed (131a) by k-means clustering or mean-shift clustering.

8. The method (100) of any one of claims 1 to 7, wherein the predetermined decomposing method comprises:
• mapping (133), by a convolutional layer (11b) of the slot building part (11), each feature (3) to a numeric value; and
• assigning (134) the features (3) to components (3a-3f) based at least in part on this numeric value.

9. The method (100) of any one of claims 1 to 8, wherein the initializing (140) of the slots comprises transforming (141) features (3) that characterize, or belong to, components (3a-3f) into features (3') that characterize, or belong to, slots (4a-4d) with at least one trainable transform layer (11c) of the slot building part (11).

10. The method (100) of claim 9, wherein at least one trainable transform layer (11c) is a fully connected layer with a rectified linear unit, ReLU, activation function.

11. The method (100) of any one of claims 1 to 10, wherein the given task comprises:
• reconstructing the original measurement data (2) from the features (3) assigned to the slots (4a-4d); and/or
• classifying a type of object whose presence the measurement data (2) indicates; and/or
• creating a new record of measurement data (2') that is modified with respect to a particular object whose presence the measurement data (2) indicates; and/or
• synthetizing multiple records of measurement data (2) into a new record of measurement data (2').

12. The method (100) of any one of claims 1 to 11, further comprising:
• providing (160) records of measurement data (2) captured by at least one sensor to the trained slot building part (11*);
• assigning (170), by the trained slot building part (11*), features (3) of the records (2) of measurement data to slots (4a-4d); and
• processing (180), by the trained task part (12*), the features (3) assigned to each slot (4a-4d), thereby obtaining a task result (5) with respect to the given task.

13. The method (100) of claim 12, further comprising:
• computing (190), based on the task result (5), an actuation signal (190a); and
• actuating (200) a vehicle (50), a driving assistance system (60), a surveillance system (70), a quality inspection system (80), and/or a medical imaging system (90), with the actuation signal (190a).

14. A computer program, comprising machine-readable instructions that, when executed by one or more computers and/or compute instances, cause the one or more computers and/or compute instances to perform the method (100) of any one of claims 1 to 13.

15. A non-transitory data carrier and/or a download product with the computer program of claim 14.

16. One or more compute instances with the computer program of claim 14, and/or with the non-transitory data carrier and/or download product of claim 15.
